Europäisches Patentamt

European Patent Office

Office européen des brevets

(19)

(11) **EP 1 084 786 B1**

(12) **EUROPÄISCHE PATENTSCHRIFT**

| | |
|---|---|
| (45) Veröffentlichungstag und Bekanntmachung des Hinweises auf die Patenterteilung: **05.11.2003 Patentblatt 2003/45** | (51) Int Cl.$^7$: **B23F 23/12** |

(21) Anmeldenummer: **99117995.3**

(22) Anmeldetag: **17.09.1999**

(54) **Verfahren zum Abrichten eines innen- oder aussenverzahnten Werkzeugs zum Feinbearbeiten von Zahnflanken**

Method of dressing an internally or externally toothed tool for finishing gear flanks

Procédé pour le dressage d'un outil à denture interne ou externe pour le finissage de flancs de dents

(84) Benannte Vertragsstaaten:
**AT CH DE IT LI**

(43) Veröffentlichungstag der Anmeldung:
**21.03.2001 Patentblatt 2001/12**

(73) Patentinhaber: **THE GLEASON WORKS**
**Rochester New York 14692 (US)**

(72) Erfinder: **Reichert, Gerhard**
**82216 Maisach (DE)**

(74) Vertreter: **Stahl, Gerhard F.W.**
**Patentanwalt Dipl.-Ing. Gerhard F.W. Stahl**
**Heilmannstrasse 10**
**81479 München (DE)**

(56) Entgegenhaltungen:
**DE-A- 4 329 360          DE-A- 19 500 801**

**Beschreibung**

Die Erfindung betrifft ein Verfahren zum Abrichten eines in einer Maschine zum Feinbearbeiten der Zahnflanken von Werkrädern aufgenommenen innen- oder außenverzahnten Werkzeugs, insbesondere Honwerkzeugs mit einem Abrichtrad, das an Stelle eines Werkrades mit dem abzurichtenden Werkzeug in Eingriff gebracht und in Rotation versetzt wird.

Bei dem unter anderem als Verzahnungshonen bekannten Feinbearbeiten der Zahnflanken von insbesondere gehärteten zahnradförmigen Werkstücken mit einem Werkzeug, dessen Flanken eine abrasive, d. h. keine einheitlich gerichteten Schneidkanten aufweisende Oberfläche haben, muß das Werkzeug in gewissen Zeitabständen neu abgerichtet werden. Dazu läßt man ein an seinen Zahnflanken mit einer Beschichtung aus Diamantkörnern oder anderen Hartstoffen versehenes Abrichtrad mit dem Werkzeug abwälzen. Dabei ist es üblich, das Werkzeug in der Feinbearbeitungsmaschine zu belassen und ihm an Stelle des zu bearbeitenden Werkrades ein Abrichtrad mit identischen Verzahnungsgrunddaten zuzuführen. Selbst bei größtmöglicher Sorgfalt beim Abrichten ist aber das Ergebnis und damit die Qualität der anschließend mit dem abgerichteten Werkzeug bearbeiteten Werkräder vielfach nicht befriedigend. Bei einem bekannten gattungsgemäßen Verfahren (DE 195 00 801 C2) ist vorgesehen, ein Abrichtrad mit einer im Vergleich zum Werkrad größeren Zähnezahl zu verwenden. Der Modul und der Schrägungswinkel des Abrichtrades ist aber mit demjenigen des Werkrades identisch, und der Achskreuzwinkel beim Abrichten des Werkzeugs entspricht demzufolge im wesentlichen demjenigen beim Feinbearbeiten des Werkrades.

Bei der Bearbeitung von Werkrädern mit einer sogenannten Störkontur, beispielsweise einer radial vorspringenden Schulter, sind dem Achskreuzwinkel natürliche Grenzen gesetzt. Wenn dieser Grenzwert des Achskreuzwinkels überschritten wird, dann würde das Werkzeug mit dem oder den radial vorspringenden Bereichen des Werkrades in Eingriff gelangen und diesen beschädigen oder selbst Schaden nehmen. Wegen der Störkontur des Werkrades kann der zulässige Achskreuzwinkel bei der Feinbearbeitung in diesen Fällen sehr klein sein. Mit abnehmendem Achskreuzwinkel verschlechtern sich jedoch zunehmend die Schnittverhältnisse, weil die Axialkomponente der Relativbewegung zwischen Werkzeug und Werkrad immer geringer wird. Da das Abrichtrad den gleichen Schrägungswinkel wie das Werkrad aufweist, wird beim Abrichten des Werkzeugs mit dem gleichen Achskreuzwinkel wie bei der Bearbeitung des Werkrades gearbeitet, so daß ebenfalls ungünstige Schnittbedingungen herrschen. Die Qualität des abgerichteten Werkzeugs und demzufolge der anschließend damit bearbeiteten Werkräder ist daher häufig unbefriedigend.

Der Erfindung liegt die Aufgabe zugrunde, das eingangs genannte Verfahren dahingehend zu verbessern, daß sich beim Abrichten des Werkzeugs günstigere Schnittbedingungen erzielen lassen.

Erfindungsgemäß wird diese Aufgabe dadurch gelöst, daß beim Abrichten ein größerer Achskreuzwinkel $\gamma_2$ eingestellt wird als bei der Feinbearbeitung der Werkräder (W), wobei ein Abrichtrad (AR) ) mit einem vom Werkrad (W) abweichenden Schrägungswinkel $\beta_{AR}$ verwendet wird, um den vorgegebenen Schrägungswinkel $\beta_T$ des Werkzeugs (T) zu erhalten.

Die Erfindung macht von der Tatsache Gebrauch, daß es zur Erzielung des gewünschten Schrägungswinkels des Werkzeugs nicht erforderlich ist, daß der Schrägungswinkel des Abrichtrades mit demjenigen des Werkrades übereinstimmt und daß der Achskreuzwinkel beim Abrichten des Werkzeugs der gleiche ist, wie beim Feinbearbeiten des Werkrades. Da das Abrichtrad und das Werkzeug keine Störkontur aufweisen, sind dem Achskreuzwinkel beim Abrichten keine Grenzen gesetzt. Das Abrichten des Werkzeugs kann daher im Vergleich zum Feinbearbeiten des Werkrades mit einem hinsichtlich der Schnittbedingungen günstigeren, d. h. größeren Achskreuzwinkel durchgeführt werden. Dies führt zu einer besseren Qualität des abgerichteten Werkzeugs und auch der damit bearbeiteten Werkräder. Bei größerem Achskreuzwinkel wird an den Wälzkreisen der axiale Geschwindigkeitsanteil erhöht, was in der Regel die Übertragung der Flankengeometrie des Abrichtrades auf das Werkzeug begünstigt und somit zu gleichmäßigeren Ergebnissen und zu einer höheren Standzeit des Werkzeugs führt. Die beim Abrichten auftretenden Kräfte werden insbesondere im Wälzkreisbereich reduziert. Die Lebensdauer des Abrichtrades wird daher vergrößert. Das durch die günstigeren Schnittbedingungen erreichte verbesserte Abrichtergebnis überträgt sich beim Bearbeiten auf das Werkrad. Es können daher in der Regel mehr Werkräder bearbeitet werden, bevor ein Abrichten des Werkzeugs erforderlich ist.

Der zur Erzielung des vorgegebenen Schrägungswinkels des Werkzeugs erforderliche Achskreuzwinkel kann in Abhängigkeit vom Schrägungswinkel des Abrichtrades errechnet und manuell eingestellt werden. Vorteilhafterweise wird der zum Abrichten erforderliche Achskreuzwinkel jedoch von der Maschinensteuerung aus den Verzahnungsdaten von Werkzeug und Abrichtrad berechnet und eingestellt.

Das erfindungsgemäße Verfahren wird nachfolgend anhand eines Ausführungsbeispiels näher erläutert. Es zeigt:

Fig. 1 eine Honmaschine, auf der das Verfahren ausführbar ist,

Fig. 2 einen Vertikalschnitt durch den Arbeitsraum der Maschine nach Fig. 1,

Fig. 3 eine schematische Darstellung eines Werkzeugs und eines mit diesem in Wälzeingriff stehenden Abrichtrades, und

Fig. 4 eine schematische Darstellung eines Werkrades und des mit diesem in Eingriff stehenden Werkzeugs.

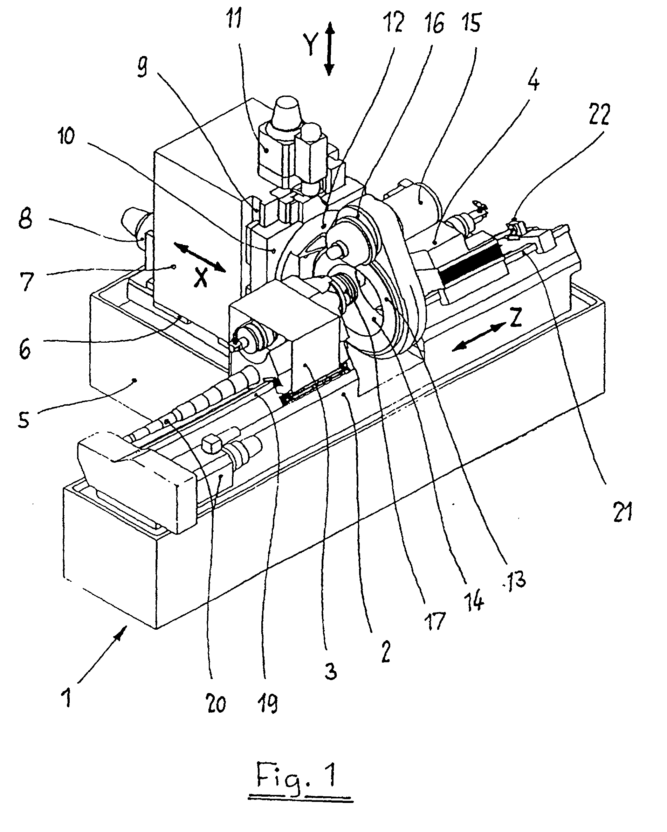

In Fig. 1 ist eine herkömmliche Honmaschine zum Feinbearbeiten der Zahnflanken von nachfolgend als Werkräder bezeichneten zahnradförmigen Werkstücken gezeigt. Ein Maschinengestell 1 mit T-förmigem Grundriß ist an seiner Vorderseite als Maschinenbett 2 gestaltet, auf dem ein Spindelstock 3 und ein Reitstock 4 verschiebbar angeordnet sind. Im hinteren Bereich 5 des Maschinengestells 1 ist in einer Längsführung 6 ein Horizontalschlitten 7 in Pfeilrichtung X verschiebbar und dafür mit einem Motor 8 antreibbar angeordnet. An seiner dem Bett 2 zugewendeten Seite besitzt der Horizontalschlitten 7 eine Vertikalführung 9, in der ein Vertikalschlitten 10 in Pfeilrichtung Y höhenverstellbar und dafür mit einem Motor 11 antreibbar angeordnet ist. An der von dem Horizontalschlitten 7 abgewendeten Seite weist der Vertikalschlitten 10 eine in Fig. 1 nur angedeutete Rundführung 12 auf, in der eine Werkzeugkopf 13 um eine in X-Richtung liegende Achse A winkeleinstellbar aufgenommen ist. Dabei ragt der Werkzeugkopf 13 im wesentlichen zwischen den Spindelstock 3 und den Reitstock 4 hinein. In einer zentralen Öffnung 14 des Werkzeugkopfes 13 ist ein als Werkzeug T bezeichnetes innenverzahntes Honrad oder Hartschabrad oder ein ähnliches Feinbearbeitungswerkzeug drehantreibbar aufgenommen, das auf seinen Zahnflanken eine abrasive, d. h. keine geometrisch definierten Schneidkanten aufweisende Oberfläche aufweist, zum Feinbearbeiten von insbesondere gehärteten Werkrädern W. Der Antrieb dafür erfolgt mit einem Motor 15 über ein nur angedeutetes spielfreies Getriebe 16.

Der Spindelstock 3 und der Reitstock 4 sind mit Einrichtungen 17, 18 zum Spannen von jeweils einem Werkrad W versehen, das sich bei seiner Bearbeitung im Inneren des Werkzeugs T mit diesem in kämmendem Zahneingriff befindet. Die Werkradachse C2, die erwähnte Achse A und - bei nicht geschwenktem Werkzeug T - die Werkzeugachse C1 liegen dabei in einer Ebene. Zum Wechseln des Werkrades W wird es außer Eingriff gebracht und aus dem Werkzeug T herausgefahren. Dazu ist der Spindelstock 3 auf dem Bett 2 in einer Führung 19 mittels eines Antriebs 20 in Pfeilrichtung Z verschiebbar, und der Reitstock 4 wird in einer Führung 21 ebenfalls in Pfeilrichtung Z nachgeführt, wofür eine nicht dargestellte Steuerung und ein hydraulischer Antrieb 22 vorgesehen sind.

Jede der Pfeilrichtungen X, Y und Z verläuft rechtwinklig zu den beiden anderen.

Beim Feinbearbeiten mit zahnradförmigen Werkzeugen wird in der Regel mit einem Achskreuzwinkel $\gamma_1$ zwischen der Werkzeugachse C1 und der Werkradachse C2 gearbeitet. Dazu wird der Werkzeugkopf 13 mit dem Werkzeug T um die Achse A verschwenkt, so daß die Achse C1 schräg zur Achse C2 steht, die immer in Pfeilrichtung Z verläuft. Die Zustellbewegung des Werkzeugs T relativ zum Werkrad W im Sinne einer Veränderung des Achsabstandes erfolgt durch eine Bewegung des Horizontalschlittens 7 in Pfeilrichtung X.

Wenn eine vorgegebene Anzahl von Werkrädern W bearbeitet worden ist, muß das Werkzeug T abgerichtet werden, um seine Schneidfähigkeit zu erhalten oder wieder herzustellen. Dazu wird der Maschine manuell oder mit nicht gezeigten Einrichtungen statt des nächsten Werkrades W erst ein Abrichtrad AR zugeführt und wie ein Werkrad gespannt. Zum Abrichten läßt man das Werkzeug T mit dem Abrichtrad AR in kämmendem Zahneingriff drehen.

Nach dem Stand der Technik wird zum Abrichten des Werkzeugs T ein Abrichtrad AR benutzt, das hinsichtlich der Verzahnungsgrunddaten, insbesondere des Schrägungswinkels der Verzahnung mit dem Werkrad W identisch ist. Beim Abrichten des Werkzeugs T wird daher mit dem gleichen Achskreuzwinkel $\gamma_1$ zwischen der Werkzeugachse C1 und der Achse C2 des Abrichtrades AR gearbeitet.

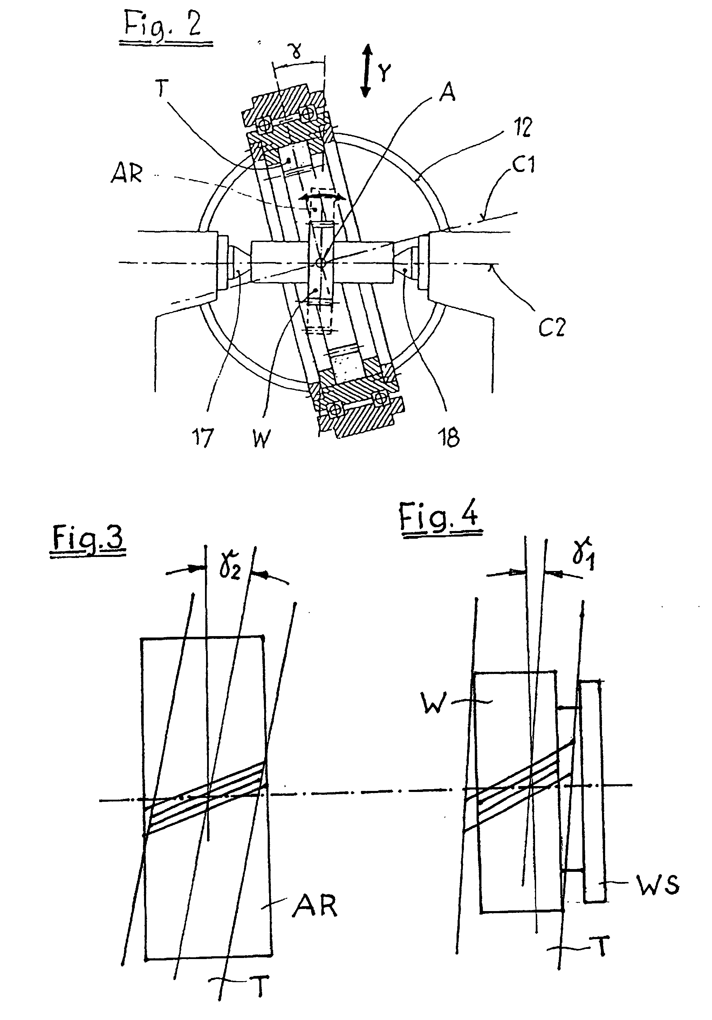

In Fig. 4 der Zeichnung ist die Bearbeitung eines Werkrades W dargestellt, das an seiner rechten Seite eine radial vorspringende Ringschulter WS aufweist. Diese Ringschulter WS bildet eine sogenannte Störkontur, die mit dem Werkzeug T nicht in Eingriff gelangen darf. Dem maximalen Achskreuzwinkel $\gamma_1$ sind daher natürliche Grenzen gesetzt. Bei dem Beispiel nach Fig. 4 beträgt der maximal zulässige Achskreuzwinkel $\gamma_1$ 5°. Bei einem derart niedrigen Achskreuzwinkel hat die Relativbewegung zwischen dem Werkzeug T und dem Werkrad W eine sehr kleine Axialkomponente, was zu ungünstigen Schnittverhältnissen führt.

Für den Schrägungswinkel $\beta_T$ des Werkzeugs T gilt folgende Formel:

$$\beta_T \cong \beta_w + \gamma_1$$

In dem gezeigten Beispiel beträgt der Schrägungswinkel $\beta_w$ des Werkrades 30°, so daß sich nach dieser Formel für den Schrägungswinkel $\beta_T$ ein Wert von etwa 35° ergibt.

Wie dies vorstehend bereits erläutert wurde, war es bisher üblich, zum Abrichten des Werkzeugs T ein Abrichtrad AR zu verwenden, das-hinsichtlich der Verzahnungsgrunddaten, insbesondere dem Schrägungswinkel mit dem Werkrad identisch war. Das Abrichten des Werkzeugs erfolgte daher ebenfalls unter dem Achskreuzwinkel $\gamma_1$, so daß die gleichen ungünstigen Schnittbedingungen wie bei der Feinbearbeitung des Werkrades vorlagen. Gemäß der Erfindung ist vorgesehen, daß das Abrichten des Werkzeugs T unter günstigeren Schnittbedingungen durchgeführt werden kann als das Feinbearbeiten des Werkrades W. Da das Werkzeug T im Gegensatz zum Werkrad W keine Störkontur aufweist, kann das Abrichten des Werkzeugs unter einem günstigeren, d. h. größeren Achskreuzwinkel $\gamma_2$ von beispielsweise 12° durchgeführt werden. Für den Schrägungswinkel $\beta_{AR}$ des Abziehrades (Abrichtrades) AR gilt die Formel:

$$\beta_{AR} \cong \beta_T - \gamma_2$$

Für den Schrägungswinkel $\beta_{AR}$ des Abziehrades AR ergibt sich somit ein Wert von etwa 23°.

Das vorstehende Beispiel zeigt, daß das Abrichten des Feinbearbeitungswerkzeugs unter günstigeren Schnittbedingungen als das Bearbeiten des Werkstücks durchgeführt werden kann, indem ein Abrichtrad benutzt wird, dessen Schrägungswinkel von demjenigen des Werkrades abweicht. Im vorliegenden Fall führte dies zu einem das Abrichten begünstigenden größeren Achskreuzwinkel. Die Verwendung eines Abrichtrades mit einem vom Werkrad abweichenden Schrägungswinkel kann aber auch dann vorteilhaft sein, wenn nicht der Achskreuzwinkel, sondern der Schrägungswinkel die Ursache für ungünstige Bearbeitungsbedingungen ist.

Vorstehend wurde das Abrichten eines innenverzahnten Feinbearbeitungswerkzeugs erläutert. Für den Fachmann ist aber erkennbar, daß die Erfindung in gleich vorteilhafter Weise auch bei außenverzahnten Feinbearbeitungswerkzeugen anwendbar ist.

Bezugszeichenliste:

| 1 | Maschinengestell |
|---|---|
| 2 | Bett |
| 3 | Spindelstock |
| 4 | Reitstock |
| 5 | Bereich von 1 |
| 6 | Längsführung |
| 7 | Horizontalschlitten |
| 8 | Motor für 7 |
| 9 | Vertikalführung |
| 10 | Vertikalschlitten |
| 11 | Motor für 10 |
| 12 | Rundführung |
| 13 | Werkzeugkopf |
| 14 | Öffnung in 13 |
| 15 | Motor für T |
| 16 | Getriebe |
| 17 | Spanneinrichtung von 3 |
| 18 | Spanneinrichtung von 4 |
| 19 | Führung für 3 |
| 20 | Antrieb für 3 |
| 21 | Führung für 4 |
| 22 | Antrieb für 4 |

| A | Achse von 12 |
|---|---|

| AR | Abrichtrad |
|---|---|
| C1 | Werkzeugachse |
| C2 | Werkradachse |
| T | Werkzeug |
| W | Werkrad |
| WS | Ringschulter |
| X | Horizontalbewegung von 7 und T |
| Y | Vertikalbewegung |
| Z | Horizontalbewegung von W |
| β | Schrägungswinkel |
| γ | Achskreuzwinkel |

**Patentansprüche**

1.   Verfahren zum Abrichten eines in einer Maschine zum Feinbearbeiten der Zahnflanken von Werkrädern aufgenommenen innen- oder außenverzahnten Werkzeugs, insbesondere Honwerkzeugs mit einem Abrichtrad, das an Stelle eines Werkrades mit dem abzurichtenden Werkzeug in Eingriff gebracht und in Rotation versetzt wird, **dadurch gekennzeichnet, daß** beim Abrichten ein größerer Achskreuzwinkel $\gamma_2$ eingestellt wird als bei der Feinbearbeitung der Werkräder (W), wobei ein Abrichtrad (AR)) mit einem vom Werkrad (W) abweichenden Schrägungswinkel $\beta_{AR}$ verwendet wird, um den vorgegebenen Schrägungswinkel $\beta_T$ des Werkzeugs (T) zu erhalten.

2.   Verfahren nach Anspruch 1, **dadurch gekennzeichnet, daß** der Achskreuzwinkel $\gamma_2$ von der Maschinensteuerung aus den Verzahnungsdaten von Werkzeug und Abrichtrad berechnet und eingestellt wird.

**Claims**

1.   Method of dressing an internally or externally toothed tool, in particular a honing tool, mounted in a machine for fine-machining the tooth flanks of gear workpieces, with a dressing wheel which is brought into engagement with the tool to be dressed in place of a gear workpiece and is set rotating, **characterized in that** a larger axis intersection angle $Y_2$ is set during the dressing operation than during the operation for fine-machining the gear workpieces (W), a dressing wheel (AR), with a helix angle $\beta_{AR}$ which differs from the gear workpiece (W), being used to obtain the predetermined helix angle $\beta_T$ of the tool (T).

2.   Method according to Claim 1, **characterized in that** the axis intersection angle $Y_2$ is calculated and set by the machine control on a basis of the toothing data of tool and dressing wheel.

**Revendications**

1. Procédé pour le dressage d'un outil à denture interne ou externe dans une machine pour le finissage des flancs de dents de roues à tailler, en particulier pour le dressage d'un outil à pierrage avec une roue de dressage, qui est mise en prise à la place d'une roue à tailler avec l'outil à dresser et qui est mise en rotation, **caractérisé en ce que** lors du dressage, un plus grand angle de croisement d'axe $\gamma_2$ est fixé par rapport à celui fixé lors du finissage des roues à tailler (W), une roue de dressage (AR) étant utilisée avec un angle d'hélice $\beta_{AR}$ s'écartant de la roue à tailler (W), afin de maintenir l'angle d'hélice $\beta_T$ prédéfini de l'outil (T).

2. Procédé selon la revendication 1, **caractérisé en ce que** l'angle de croisement d'axe $\gamma_2$ est calculé et réglé par le système de commande de la machine à partir des données de denture de l'outil et de la roue de dressage.

Fig. 1

Fig. 2

Fig.3

Fig.4